# EUROPÄISCHE PATENTANMELDUNG

(11) **EP 0 752 269 A2**
(43) Veröffentlichungstag der Anmeldung: **08.01.1997**
(21) Anmeldenummer: 96110673.9
(22) Anmeldetag: 02.07.1996
(51) Int. Cl.: B01J 19/24, B01J 19/00, C08F 212/08, C08F 220/12, C08F 220/44

(54) **Verfahren und Vorrichtung zur kontinuierlichen Herstellung von Polymeren**

(30) Priorität: 03.07.1995 DE 19524180
(71) Anmelder: BASF Aktiengesellschaft, 67063 Ludwigshafen (DE)
(72) Erfinder: Fischer, Wolfgang, Dr., 67067 Ludwigshafen (DE); Baumgärtel, Michael, Dr., 67227 Frankenthal (DE)
(74) Vertreter: Isenbruck, Günter, Dr.

(57) **Zusammenfassung**

Bei einem Verfahren und einer Vorrichtung zur kontinuierlichen Herstellung von Polymeren aus Reaktionskomponenten, insbesondere von Copolymeren aus Styrol und Acrylnitril, durch Masse- bzw. Lösungspolymerisation werden die Reaktionskomponenten durch einen Kreislaufreaktor geführt, der mindestens einen Rohrbündelreaktor aufweist, dessen Rohre mit einem flüssigen Wärmeübertragungsmedium in Wärmekontakt stehen und der mit mindestens einem statischen Mischelement verbunden ist.

## Beschreibung

Die Erfindung betrifft ein Verfahren und eine Vorrichtung zur kontinuierlichen Herstellung von Polymeren aus Reaktionskomponenten, insbesondere von Copolymeren aus Styrol und Acrylnitril, durch Masse- bzw. Lösungspolymerisation.

Die radikalische Polymerisation von Acrylnitril mit vinylaromatischen Verbindungen wie Styrol, α-Methylstyrol, Vinyltoluol und dergleichen, gegebenenfalls unter Verwendung radikalischer Initiatoren, ist bekannt (DE 23 61 743, DE 25 13 253, DE 25 40 517, DE 26 14 674, DE 26 19 969). Es ist bekannt, Polymerisationen in einem Rührkessel durchzuführen. Die Reaktionswärme kann dabei entweder über die Wand oder durch Siede- oder Rückflußkühlung abgeführt werden (DE 34 30 247, DE 32 37 076, DE 25 04 659). Dies ist jedoch bei der Copolymerisation von Vinylaromaten und Acrylnitril nach diesem Verfahren nur bei nicht zu hohen Umsätzen sowie in Gegenwart größerer Mengen an inerten Lösungsmitteln möglich, da sonst nicht handhabbare, höhere Viskositäten auftreten. Auch darf der Umsatz nicht zu hoch sein, da in kontinuierlichen Rührkesseln bei höheren Umsätzen Produkte mit breiteren Molmassenverteilungen erhalten werden (vgl. Z. Tadmor, Ind. Eng. Chem. Fundam. 1966, 5, 336 und G. Gerrens, Polymerisationstechnik, Ullmanns Enzyklopädie der technischen Chemie, 4. Aufl., Verlag Chemie, Weinheim, 1980, 107 ff.) Da in der Regel die nicht umgesetzten Monomere und das Lösungsmittel aus wirtschaftlichen Gründen in den Reaktor zurückgeführt werden, ist hier ein niedriger Umsatz nachteilig, zumal er auch zu relativ niedrigeren Raum-Zeit-Ausbeuten führt. Die zur Verbesserung der Wärmeabfuhr und zur Handhabung hochviskoser Polymerlösungen entwickelten Rührkessel sind technisch sehr aufwendig (DD 273 265, DD 294 429) und damit sehr teuer.

Der Erfindung liegt die Aufgabe zugrunde, ein Verfahren und eine Vorrichtung zur Herstellung von Polymeren und Copolymeren insbesondere aus Vinylaromaten und Acrylnitril mit enger Molmassenverteilung in Gegenwart von möglichst geringen Mengen an Lösungsmittel und mit großem Umsatz zu schaffen.

Es wurde überraschend gefunden, daß die Aufgabe dadurch gelöst werden kann, daß die Reaktionskomponenten durch einen Kreislaufreaktor geführt werden, der mindestens einen Rohrbündelreaktor aufweist, dessen Rohre mit einem flüssigen Wärmeübertragungsmedium beaufschlagt werden, und der mit mindestens einem statischen Mischelement verbunden ist. Der Rohrbündelreaktor ist vorzugsweise ein Rohrbündelwarmetauscher, der aus geraden Rohren besteht. In solchen Rohrreaktoren ist es prinzipiell möglich, höhere Viskositäten zu beherrschen. Gleichzeitig können diese Reaktoren auch eine große spezifische Kühlfläche zur Abfuhr der Reaktionswärme besitzen. Vorzugsweise beträgt das Volumen des Rohrbündelwärmeaustauschers mindestens 75% des Gesamtvolumens der Anordnung.

Vorzugsweise werden zwei Rohrbündelreaktoren und zwei statische Mischelemente eingesetzt, von denen eines zwischen dem Einsatzgemischzulauf und dem stromabwärtsfolgenden Rohrbündelreaktor und das andere zwischen den beiden Rohrbündelreaktoren angeordnet ist. Die ganze Anordnung ist im Kreislauf geschaltet und die Reaktionsmasse wird durch eine Kreislaufpumpe umgewälzt. In den Kreislauf wird das Einsatzgemisch durch eine Einsatzgemischzufuhr gefördert, und über einen Auslauf wird die Reaktionsmasse aus dem Reaktor in einen Entgasungsextruder geleitet. Dem Reaktor wird eine Mischung aus Frischmonomeren und aus der Entgasung rückgeführten flüchtigen Bestandteilen, die kondensiert wurden, zugeführt.

Das erfindungsgemäße Verfahren zur Herstellung von Polymeren, insbesondere thermoplastischen Copolymerisaten wird im folgenden in seinen Einzelheiten näher erläutert:
Die genannten Copolymerisate sind aus mindestens einem vinylaromatischen Monomeren a) und mindestens einem Monomeren b) aus der Gruppe der Nitrile der (Meth)acrylsäure und der Ester der (Meth)acrylsäure von Alkoholen mit 1 bis 8 C-Atomen sowie Maleinsäureanhydrid aufgebaut. Als vinylaromatische Monomere kommen vorzugsweise in Betracht: Styrol, α-Methylstyrol und auch das para-Methylstyrol. Als bevorzugte Copolymerisate seien genannt die binären Copolymerisate aus Styrol und Acrylnitril, aus α-Methylstyrol und Acrylnitril sowie die ternären Polymerisate von α-Methylstyrol, Styrol und Acrylnitril.

Bei der Lösungspolymerisation können, bezogen auf 100 Gew.-% des Monomerengemisches aus den Monomeren a) und b), zusätzlich Lösungsmittel in einem Anteil von 1 bis 25 Gew.-%, bevorzugt 2 bis 18 Gew.-%, sowie bis zu 5 Gew.-% Wasser zugeführt werden. Als inerte Lösungsmittel kommen unpolare Lösungsmittel wie aromatische Kohlenwasserstoffe mit 6 bis 12 C-Atomen, insbesondere Benzol, Toluol, Ethyltoluol oder Ethylbenzol, in Frage. Besonders bevorzugt wird Ethylbenzol angewendet.

Das erfindungsgemäße Verfahren kann sowohl thermisch als auch unter Verwendung der üblichen Initiatoren, z.B. von organischen Peroxiden oder organischen Azoverbindungen, die dem Fachmann bekannt sind, durchgeführt werden. Diese Starter werden in den dem Fachmann geläufigen Konzentrationen, d.h. im Bereich von 0,001 bis 0,5 Gew.-%, jeweils bezogen auf die Summe der Monomere a) und b), eingesetzt. Dem Fachmann ist bekannt, in welcher Form er diese Initiatoren (als Lösungsmittel in Monomeren oder im Losungsmittel) in den Reaktor, in dem die Polymerisation stattfindet, kontinuierlich zudosieren kann.

Das erfindungsgemäße Verfahren wird vorzugsweise in einem hydraulisch gefüllten Reaktor im Temperaturbereich von 50 bis 230 °C, insbesondere bei Temperaturen von 50 bis 180 °C, in einem Druckbereich von 0,1 bar bis 100 bar, insbesondere von 0,5 bis 75 bar und mit mittleren Verweilzeiten der Monomeren in der Reaktionsmassen von 20 bis 420 Minuten, insbesondere 45 bis 300 Minuten, durchgeführt.

Die Viskosität des Reaktionsmediums kann bis zu 750 Pas, vorzugsweise bis zu 500 Pas, betragen. Die Strömungsgeschwindigkeit in den Rohren des Rohrbündelreaktors kann im Bereich von 0,5 bis 20 cm/s, vorzugsweise im Bereich von 2 bis 15 cm/s, liegen. Das Kreislaufverhältnis, definiert als Quotient aus dem durch die Kreislaufpumpe geförderten Massenstrom und dem Massenstrom des Zulaufs, kann im Bereich von 5 bis 125, bevorzugt im Bereich von 10 bis 100, liegen. Der Auslauf aus dem Reaktor (die Austragsmenge entspricht der Zulaufmenge, da der Reaktor hydraulisch gefüllt ist) wird durch ein- oder mehrstufiges Verdampfen von flüchtigen Bestandteilen bis auf 1 Gew.-%, insbesondere weniger als 0,5 Gew.-%, bezogen auf das Polymerisat, befreit. Die abgetrennten flüchtigen Bestandteile können nach ihrer Kondensation in den Reaktor zurückgeführt werden.

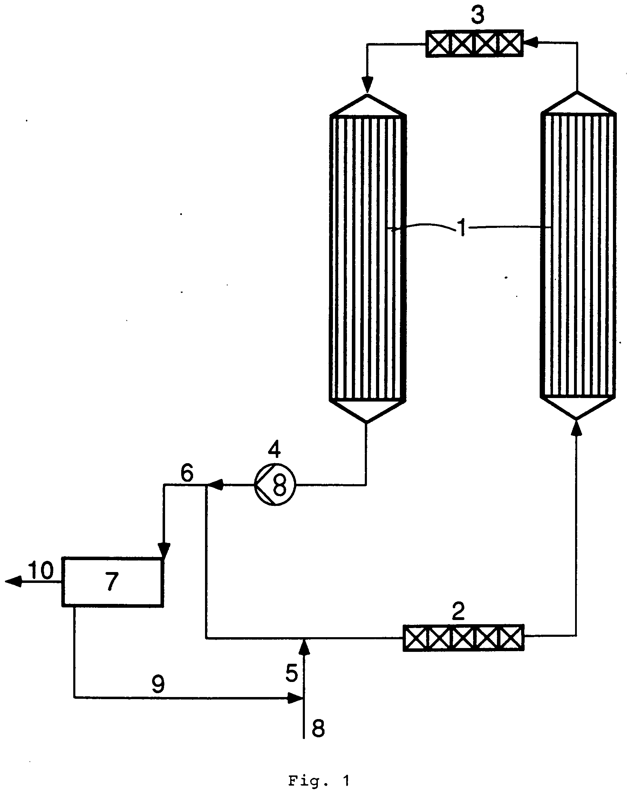

Nachfolgend sind das erfindungsgemäße Verfahren und die hierfür erforderliche Vorrichtung anhand von Beispielen bevorzugter Ausführungsformen und von Vergleichsversuchen beschrieben. Die Abbildung zeigt eine schematische Zeichnung der für die Durchführung der Versuche benutzten Apparatur.

### Versuchsanordnung

Die Versuche wurden in einem Kreislaufreaktor, dessen Aufbau schematisch in der Abbildung dargestellt ist, durchgeführt. Er besteht aus 2 Rohrbündelreaktoren mit je 19 Rohren 1, die einen Innendurchmesser von 30 mm und eine Länge von 300 cm besitzen. Sie werden mit flüssigem Wärmeträger umspült. Zum Reaktor gehören des weiteren 2 statische SMX-Mischer 2 und 3 der Firma Sulzer. Die Mischelemente dieser SMX-Mischer bestehen aus einem Gerüst ineinandergreifender, sich kreuzender Stege. Solche SMX-Mischer werden vorwiegend im laminaren Strömungsbereich verwendet. Außerdem gehören zum Reaktor eine Kreislaufpumpe 4, eine Einsatzgemischzufuhr 5, ein Auslauf 6 sowie ein Entgasungsextruder 7. Das Volumen des gesamten Reaktors beträgt 100 l. Dem Reaktor wird eine Mischung aus Frischmonomeren 8 und aus der Entgasung rückgeführten flüchtigen Bestandteilen 9, die kondensiert wurden, zugeführt. Die ausgetragene Reaktionsmasse wird dem Verdampfer-Extruder zugeführt, in dem die flüchtigen Bestandteile abgezogen werden. Das Copolymerisat aus dem Extruder wird in Form von Strängen ausgetragen, abgekühlt und granuliert.

An den erhaltenen Granulaten wurde durch Gel-Permeationschromatographie die Uneinheitlichkeit bestimmt. Diese Uneinheitlichkeit ist definiert als Mw/Mn; und ist ein Maß für die Breite der Molmassenverteilung (siehe B. Vollmert "Grundriss Der Makromolekularen Chemie, Bd. III, S. 130 ff). Als Standard diente eine Polystyrol-Eichkurve.

Versuchsbedingungen der Gel-Permeationschromatographie:
- Bezeichnung der Säule:: PL-Gel 10 um MIXED-B
- Firma:: Polymer Laboratories
- Anzahl:: 5 Stück
- Länge + Durchmesser:: 300 x 7,5 mm
- Partikelgröße:: 8-10 µm
- Porengröße:: 50-10⁶ Å (gemischt)
- Material:: PS/DVB
- Säulentemperatur:: 35°C
- Fluß:: 1,2 ml/min
- Detektoren:: RI410 (WATERS)
UV Spectra 100 bei 254 nm (TSP Darmstadt)

### Beispiel 1

Im stationären Zustand wurden der Polymerisationsanlage eine Mischung aus Frischmonomeren sowie der kondensierten flüchtigen Bestandteile aus dem Entgasungsextruder, die gegebenenfalls von unerwünschten Bestandteilen befreit wurden, zugeführt. Die Zusammensetzung der in den Reaktor gepumpten Monomerzufuhr wurde so gewählt, daß das Copolymerisat 35 Gew.-% Acrylritril und 65 Gew.-% Styrol enthielt. Der Gehalt an Ethylbenzol, bezogen auf die gesamte Reaktionsmasse im Reaktor, betrug 15 Gew.-%. Das Kreislaufverhältnis betrug 45, die mittlere Verweilzeit 2,5 Stunden und die Reaktionstemperatur 145 °C. Es wurde ein Umsatz von 55% erreicht. Die Uneinheitlichkeit betrug 2,2.

### Beispiel 2

Wie Beispiel 1, jedoch betrug die Reaktionstemperatur 155 °C. Es wurde ein Umsatz von 64% und eine Uneinheitlichkeit von 2,2 erhalten.

### Beispiel 3

Wie Beispiel 1, jedoch betrug die Reaktionstemperatur 165 °C. Es wurde ein Umsatz von 71% und eine Uneinheitlichkeit von 2,3 erhalten.

### Beispiel 4

Wie Beispiel 1, jedoch betrug die Reaktionstemperatur 170 °C und die mittlere Verweilzeit 2,3 Stunden. Es wurde ein Umsatz von 81% und eine Uneinheitlichkeit von 2,3 erhalten.

### Beispiel 5

Wie Beispiel 4, jedoch wurde eine mittlere Verweilzeit von 2,7 Stunden eingestellt. Es wurde ein Umsatz von 85% und eine Uneinheitlichkeit von 2,3 erhalten.

### Beispiel 6

Wie Beispiel 1, jedoch betrug die Reaktionstemperatur 170 °C und die mittlere Verweilzeit 2,2 Stunden und der Anteil an Ethylbenzol 12%. Es wurde ein Umsatz von 82% und eine Uneinheitlichkeit von 2,3 erhalten.

### Vergleichsbeispiele

Die Vergleichsbeispiele wurden in einem Rührkessel mit Siedekühlung durchgeführt. Auch in diesem Fall betrug das Gesamtvolumen des Reaktors 100 l.

### Vergleichsbeispiel 1

Die Versuchsbedingungen entsprachen den in Beispiel 1 beschriebenen. Der erreichte Umsatz betrug 52%, die Uneinheitlichkeit 2,3.

### Vergleichsbeispiel 2

Die Versuchsbedingungen entsprachen den in Beispiel 2 beschriebenen. Der erreichte Umsatz betrug 63%, die Uneinheitlichkeit 2,7.

### Vergleichsbeispiel 3

Die Versuchsbedingungen entsprachen den in Beispiel 3 beschriebenen. Der erreichte Umsatz betrug 69%, die Uneinheitlichkeit 2,9.

### Vergleichsbeispiel 4

Die Versuchsbedingungen entsprechend dem Beispiel 4 führten zu einer Reaktionsmasse, die sich aufgrund ihrer Zähigkeit nicht mehr aus dem Reaktor austragen ließ.

### Vergleichsbeispiel 5

Die Versuchsbedingungen entsprechend dem Beispiel 6 führten zu einer Reaktionsmasse, die sich aufgrund ihrer Zähigkeit nicht mehr aus dem Reaktor austragen ließ.

## Patentansprüche

1. Verfahren zur kontinuierlichen Herstellung von Polymeren aus Reaktionskomponenten, insbesondere von Copolymeren aus Styrol und Acrylnitril, durch Masse- bzw. Lösungspolymerisation, **dadurch gekennzeichnet, daß** die Reaktionskomponenten durch einen Kreislaufreaktor geführt werden, der mindestens einen Rohrbündelreaktor aufweist, dessen Rohre mit einem flüssigen Wärmeübertragungsmedium in Wärmekontakt stehen, und der mit mindestens einem statischen Mischelement verbunden ist.

2. Verfahren nach Anspruch 1, dadurch gekennzeichnet, daß die Reaktionskomponenten durch das Innere der Rohre des Rohrbündelreaktors geführt werden, die vom Wärmeübertragungsmedium umspült werden.

3. Verfahren nach Anspruch 1 oder 2, dadurch gekennzeichnet, daß dem Kreislaufreaktor Gemische aus mindestens einem vinylaromatischen Monomeren und mindestens einem Monomeren aus der Gruppe der Nitrile der (Meth)acrylsäure und der Ester der (Meth)acrylsäure mit Alkoholen mit 1 bis 8 C-Atomen, sowie Maleinsäureanhydrid, zugeführt werden, wobei als vinylaromatische Monomere vorzugsweise Styrol, α-Methylstyrol und/oder para-Methylstyrol eingesetzt werden.

4. Verfahren nach einem der vorhergehenden Ansprüche, dadurch gekennzeichnet, daß bei der Lösungspolymerisation als Lösungsmittel aromatische Kohlenwasserstoffe mit 6 bis 12 C-Atomen, insbesondere Benzol, Toluol, Ethyltoluol oder Ethylbenzol eingesetzt werden, wobei vorzugsweise bezogen auf 100 Gew.-% des Monomerengemisches zusätzlich Lösungsmittel in einem Anteil von 1 bis 25 Gew.-%, bevorzugt 2 bis 18 Gew.-%, sowie bis zu 5 Gew.-% Wasser zugeführt werden.

5. Verfahren nach einem der vorhergehenden Ansprüche, dadurch gekennzeichnet, daß die Umsätze der Polymerisation über 60%, vorzugsweise über 65% liegen.

6. Verfahren nach einem der vorhergehenden Ansprüche, dadurch gekennzeichnet, daß die Reaktionstemperatur im Reaktor im Bereich von 50 bis 230 °C, vorzugsweise von 50 bis 180 °C, und der Druck im Bereich von 0,1 bis 100 bar, vorzugsweise von 0,5 bis 75 bar, liegt, und/oder daß die mittlere Verweilzeit der Monomeren in der Reaktionsmasse 20 bis 420 Minuten, vorzugsweise 45 bis 300 Minuten beträgt, und/oder daß die Strömungsgeschwindigkeit des Reaktiorsmediums im Rohrbündelreaktor im Bereich von 0,5 bis 20 cm/s, vorzugsweise im Bereich von 2 bis 15 cm/s, liegt, und/oder daß die Viskosität des Reaktionsmediums maximal 750 pas, vorzugsweise maximal 500 pas beträgt, und/oder daß das Massenverhältnis des im Kreislauf geförderten Massenstroms zu dem Massenstrom des Zulaufs im Bereich von 5 bis 125, vorzugsweise im Bereich von 10 bis 100 liegt.

7. Verfahren nach einem der vorhergehenden Ansprüche dadurch gekennzeichnet, daß der Wert der Uneinheitlichkeit der Polymerisate kleiner als 2,7, vorzugsweise Kleiner als 2,5 ist.

8. Vorrichtung zur Durchführung des Verfahrens nach einem der vorhergehenden Ansprüche, dadurch gekennzeichnet, daß der Kreislaufreaktor mindestens einen Rohrbündelreaktor (1) aufweist, der mit mindestens einem statischen Mischelement (2, 3) verbunden ist und daß mindestens ein Einsatzgemischzulauf (5) für die Zuführung der Monomere, ein Auslauf (6) für die Polymere sowie eine Kreislaufpumpe (4) vorgesehen sind, wobei vorzugsweise der Auslauf (6) mit einem Entgasungsextruder (7) verbunden ist.

9. Vorrichtung nach Anspruch 8, dadurch gekennzeichnet, daß der Entgasungsextruder (7) über einen Kondensator für flüchtige Bestandteile mit dem Einsatzgemischzulauf (5) verbunden ist.

10. Vorrichtung nach einem der Ansprüche 8 oder 9, dadurch gekennzeichnet, daß der Einsatzgemischzulauf (5) über ein statisches Mischelement (2) an ein Ende eines Rohrbündelreaktors (1) angeschlossen ist, dessen anderes Ende über ein weiteres statisches Mischelement (3) mit einem Ende eines weiteren Rohrbündelreaktors (1) in Verbindung steht, dessen anderes Ende mit dem Zulauf einer Kreislaufpumpe (4) in Verbindung steht, deren Ausgang mit dem Auslauf (6) sowie zur Bildung eines Kreislaufs mit dem Einsatzgemischzulauf (5) verbunden ist.
